(19) Europäisches Patentamt
European Patent Office
Office européen des brevets

(11) EP 3 005 881 A1

(12) EUROPEAN PATENT APPLICATION

(43) Date of publication:
13.04.2016 Bulletin 2016/15

(51) Int Cl.:
*A23L 2/44* (2006.01) *A23L 2/58* (2006.01)

(21) Application number: 14188518.6

(22) Date of filing: 10.10.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: DSM IP Assets B.V.
6411 TE Heerlen (NL)

(72) Inventor: The designation of the inventor has not yet been filed

(74) Representative: Steck, Melanie
DSM Nutritional Products Ltd
Patent Department
Wurmisweg 576
4303 Kaiseraugst (CH)

# (54) Color-stable beverages containing 8'-apo-ß-carotene-8'-al

(57) The present invention is directed to beverages comprising 8'-apo-β-carotene-8'-al with increased color stability, whereby tocopheryl acetate has been added.

EP 3 005 881 A1

## Description

The present invention is directed to a beverage with improved color stability comprising 8'-apo-β-carotene-8'-al (in the following "apoal") and tocopheryl acetate.

Surprisingly it was found that the addition of tocopheryl acetate to a beverage comprising apoal leads to improved color stability of said beverage.

In a preferred embodiment of the present invention the apoal in the beverage is in a water-soluble or water-dispersible form. Such a form or also called "formulation" contains the apoal embedded in a matrix of protective colloid(s) or of emulsifier(s) or a combination of protective colloid(s) with emulsifier(s). Hereby the protective colloid(s) are preferred. Such a formulation will be explained in more detail below.

The tocopheryl acetate may also be added in a water-soluble or water-dispersible form. Such a form or also called "formulation" contains the tocopheryl acetate embedded in a matrix of protective colloid(s) or of emulsifier(s) or a combination of protective colloid(s) with emulsifier(s). Hereby the protective colloid(s) are preferred. Such a formulation will be explained in more detail below.

It is, however, also possible to emulsify tocopheryl acetate in its pure form or mixed with an oil into a beverage concentrate like concentrated fruit-juice which is then used to manufacture the beverage. The oil may be any oil being suitable for human consumption, preferably a vegetable oil.

In a preferred embodiment of the present invention apoal and tocopheryl acetate are both embedded in a matrix of protective colloid(s) or of emulsifier(s) or a combination of protective colloid(s) with emulsifier(s), whereby the protective colloid(s) are preferred. For this embodiment several possibilities exist:

a) Apoal and tocopheryl acetate are embedded in the same matrix of protective colloid(s) or of emulsifier(s) or a combination of protective colloid(s) with emulsifier(s), or

b) Apoal and tocopheryl acetate are embedded separately in two different matrices of protective colloids or of emulsifiers or a combination of protective colloid(s) with emulsifier(s).

For option a) two possibilities exist:

a1) Apoal and tocopheryl acetate are embedded together in the same matrix of protective colloid(s) or of emulsifier(s) or a combination of protective colloid(s) with emulsifier(s); or
a2) Apoal and tocopheryl acetate are embedded separately in the same matrix of protective colloid(s) or of emulsifier(s) or a combination of protective colloid(s) with emulsifier(s).

### Apoal

8'-apo-β-carotene-8'-al = trans-17-(2',6',6'-trimethylcyclohexen-1'-yl)-2,6,11,15-tetramethylheptadecaoctaene-(2,4,6,8,10,12,14,16)-al(1).

The term "apoal" as used herein not only encompasses the (all-E)-isomer, but also any of its mono-, oligo- or poly-(Z)-isomers.

Amount of apoal in the beverage

Preferably the amount of apoal is in the range of from 1 to 30 ppm, more preferably it is in the range of from 2 to 20 ppm, most preferably it is in the range of from 2 to 10 ppm, based on the total weight of the beverage.

### Apoal Form

In the formulation the apoal is embedded in a matrix of protective colloid(s) or of emulsifier(s) or a combination of protective colloid(s) with emulsifier(s).

The amount of apoal in the formulation is usually in the range of from 0.1 to 10 weight-%, based on the total weight of the formulation.

Protective colloid

The protective colloid may be selected from the group consisting of modified food starch (esp. OSA starch) and proteins of animal or plant origin such as gelatin, particularly fish, swine, poultry or bovine gelatin.

"Modified food starch"

A modified food starch is a food starch that has been chemically modified by known methods to have a chemical structure which provides it with a hydrophilic and a lipophilic portion. Preferably the modified food starch has a long hydrocarbon chain as part of its structure (preferably C5-C18).

At least one modified food starch is preferably used to make a formulation of this invention, but it is possible to use a mixture of two or more different modified food starches in one formulation.

Starches are hydrophilic and therefore do not have emulsifying capacities. However, modified food starches are made from starches substituted by known chemical methods with hydrophobic moieties. For example starch may be treated with cyclic dicarboxylic acid anhydrides such as succinic anhydrides, substituted with a hydrocarbon chain (see O. B. Wurzburg (editor), "Modified Starches: Properties and Uses, CRC Press, Inc. Boca Raton, Florida, 1986, and subsequent editions). A particularly preferred modified food starch of this invention has the following formula (I)

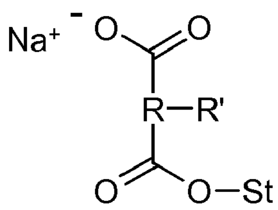

(I)

wherein St is a starch, R is an alkylene radical and R' is a hydrophobic group. Preferably R is a lower alkylene radical such as dimethylene or trimethylene. R' may be an alkyl or alkenyl group, preferably having 5 to 18 carbon atoms. A preferred compound of formula (I) is an "OSA-starch" (starch sodium octenyl succinate). The degree/extent of substitution, i.e. the number of esterified hydroxyl groups to the number of free non-esterified hydroxyl groups usually varies in a range of from 0.1% to 10%, preferably in a range of from 0.5% to 4%, more preferably in a range of from 3% to 4%.

The term "OSA-starch" denotes any starch (from any natural source such as corn, waxy maize, waxy corn, wheat, tapioca and potato or synthesized) that was treated with octenyl succinic anhydride (OSA). The degree/extent of substitution, i.e. the number of hydroxyl groups esterified with OSA to the number of free non-esterified hydroxyl groups usually varies in a range of from 0.1% to 10%, preferably in a range of from 0.5% to 4%, more preferably in a range of from 3% to 4%. OSA-starches are also known under the expression "modified food starch".

The term "OSA-starches" encompasses also such starches that are commercially available e.g. from National Starch/Ingredion under the tradenames HiCap 100, Capsul, Capsul HS, Purity Gum 2000, Clear Gum Co03, UNI-PURE, HYLON VII; from National Starch/Ingredion and Roquette Frères, respectively; from CereStar under the tradename C*EmCap or from Tate & Lyle.

In a preferred embodiment of the present invention a commercially available modified food starch such as e.g. HiCap 100 (from National Starch/Ingredion) and ClearGum Co03 (from Roquette Frères) is used. It is especially advantageous if such a starch or an OSA starch in general is further improved according to a process as disclosed in WO 2007/090614, especially according to a procedure as described in examples 28, 35 and/or 36 of WO 2007/090614.

Thus, in a further improved embodiment of the present invention such a commercially available starch has been centrifuged as an aqueous solution or suspension before use. The centrifugation may be carried out at 1000 to 20000 g depending on the dry mass content of the modified food starch in the aqueous solution or suspension. If the dry mass content of the modified food starch in the aqueous solution or suspension is high, the applied centrifugation force is also high. For example for an aqueous solution or suspension with a dry mass content of the modified food starch of 30 weight-% a centrifugation force of 12000 g may be suitable to achieve the desired separation.

The centrifugation may be carried out at dry matter contents in the range of from 0.1-60 weight-%, preferably in the range of from 10-50 weight-%, most preferably in the range of from 15-40 weight-% at temperatures in the range of from 2-99 °C, preferably in the range of from 10-75°C, most preferably in the range of from 40-60°C.

Emulsifier

The emulsifier may be selected from the group consisting of polyglycerol esters of edible fatty acids, citric acid esters of monoglycerides of edible fatty esters, citric acid esters of diglycerides of edible fatty esters, physiologically tolerated polyhydric alcohols, esters of mono- and diglycerides of edible fatty acids, sodium alkyl sulfates such as sodium lauryl sulfates, polysorbates and any mixture thereof.

An edible fatty acid is a saturated fatty acid or an unsaturated fatty acid, which has been approved for use in foodstuffs. The edible fatty acid is preferably a fatty acid selected from the group comprising palmitic acid, stearic acid, oleic acid and erucic acid. The esterified fatty acids can be the same or differ from one another.

Physiologically tolerated polyhydric alcohols are especially glycerol, monoesters of glycerol with $C_1$-$C_5$-monocarboxylic acids, monoethers of glycerol, propylene glycol or sorbitol.

Preferred examples of esters of mono- and diglycerides of edible fatty acids are acetic acid ester of mono- and diglycerides of edible fatty acids (E472a), lactic acid ester of mono- and diglycerides of edible fatty acids (E472b), citric acid ester of mono- and diglycerides of edible fatty acids (E472c) as already mentioned above, tartaric acid ester of mono- and diglycerides of edible fatty acids (E472d), diacetyl tartaric acid ester of mono- and diglycerides of edible fatty acids (E472e), a mixture of acetic and tartaric acid esters of mono- and diglycerides of edible fatty acids (E472f), and any mixture thereof.

Preferred examples of polysorbates are: polyoxyethylene sorbitan monofatty acid esters such as polyoxyethylene(20) sorbitan monolaurate, poly-oxyethylene(20) sorbitan-monopalmitate, polyoxyethylene(20) sorbitan monostearate and polyoxyethylene(20) sorbitan monooleate.

Further components

Additionally water- and/or fat-soluble antioxidants may be present.

Fat-soluble anti-oxidants

Suitable fat-soluble antioxidants are known to the person skilled in the art. Preferably fat-soluble antioxidants are used that are approved for their application in food products and beverages.

Preferred fat-soluble antioxidants are selected from the group consisting of tocopherols, e.g. dl-α-tocopherol (i.e. synthetic tocopherol), d-α-tocopherol (i.e. natural tocopherol), β- or γ-tocopherol, or a mixture of two or more of these.

Preferably the total amount of the fat-soluble antioxidants in the formulation according to the present invention is in the range of from 0 to 1.5 weight-%, more preferably it is in the range of from 0.01 to 1.0 weight-%, most preferably it is in the range of from 0.1 to 0.5 weight-%, based on the total weight of the formulation.

Water-soluble anti-oxidants

Suitable water-soluble antioxidants are known to the person skilled in the art. Preferably water-soluble antioxidants are used that are approved for their application in food products and beverages.

Preferred water-soluble antioxidants are selected from the group consisting of citric acid, citric acid salts, ascorbic acid, ascorbic acid salts (preferably sodium ascorbate), as well as any mixture thereof.

Preferably the total amount of the water-soluble antioxidants in the formulation according to the present invention is in the range of from 0.1 to 4.0 weight-%, more preferably it is in the range of from 0.1 to 2.0 weight-%, based on the total weight of the formulation.

Since the amounts of the apoal and the fat- and/or water-soluble antioxidants are given above, the amount of the protective colloid(s) and/or the emulsifier(s) is chosen in such a way that the total amount sums up to 100 weight-%.

Especially preferred is the form **"Apoal 2.5% EM CC"** (emulsion crystal clear) as commercially available by DSM Nutritional Products AG, Kaiseraugst, Switzerland, and as described in detail in WO 2013/144221 whose content is hereby incorporated by reference.

This especially preferred apoal form comprises

a) apoal in an amount in the range of from 0.1 to 10 weight-% (preferably 0.5 to 5 weight-%, more preferably 0.5 to 3.0 weight-%, most preferably 1.0 to 3.0 weight-%), based on the total weight of the form,
b) at least one modified food starch in an amount in the range of from 20 to 60 weight-% (preferably 30 to 50 weight-%), based on the total weight of the form,
c) at least one saccharide in an amount in the range of from 0.5 to 60 weight-% (preferably 0.5 to 30 weight-%, more preferably 0.5 to 20 weight-%, even more preferably 0.5 to 10 weight-%, most preferably 1.0 to 10 weight-%), based on the total weight of the form, and
d) water in an amount in the range of from 35 to 75 weight-% (preferably 45 to 65 weight-%), based on the total weight of the form, so that the amount of all components a) to d) (i.e. a) + b) + c) + d)) sums up to 100 weight-%, whereby the apoal is embedded in a matrix of the modified food starch(es) and the saccharide(s).

The expression "at least one" means in the case of compound b) e.g. that only one modified food starch, but also a mixture of two or more modified food starches may be present. The same applies accordingly to compound c).

Compound c) - "saccharide"

The term "saccharide" in the context of the present invention encompasses mono-, di-, oligo- and polysaccharides, as well as any mixtures thereof.
Examples of monosaccharides are fructose, glucose (= dextrose), mannose, galactose, sorbose, as well as any mixtures thereof.
Preferred monosaccharides are glucose and fructose, as well as any mixture thereof.
The term "glucose" in the context of the present invention does not only mean the pure substance, but also a glucose syrup with a DE $\geq$ 90. This also applies for the other monosaccharides.
The term "dextrose equivalent" (DE) denotes the degree of hydrolysis and is a measure of the amount of reducing sugar calculated as D-glucose based on dry weight; the scale is based on native starch having a DE close to 0 and glucose having a DE of 100.
Examples of disaccharides are saccharose, isomaltose, lactose, maltose and nigerose, as well as any mixture thereof.
An example of an oligosaccharide is maltodextrin.
An example of a polysaccharide is dextrin.
An example of a mixture of mono- and disaccharides is invert sugar (glucose + fructose + saccharose).
Mixtures of mono- and polysaccharides are e.g. commercially available under the tradenames Glucidex IT 47 (from Roquette Frères), Dextrose Monohydrate ST (from Roquette Frères), Sirodex 331 (from Tate & Lyle) and Glucamyl F 452 (from Tate & Lyle).
In an embodiment of the present invention the saccharide c) is a mixture of a glucose syrup with a DE of 95 and a glucose syrup with a DE of 47 in a weight ratio of 1 : 1.
Such mixtures of glucose syrups are preferred examples of the saccharide c).
"Apoal 2.5% EM CC" is manufactured as follows: A solution of apoal and dl-α-tocopherol in a suitable solvent is homogenized into an aqueous solution of modified food starch, dextrose, glucose syrup and sodium ascorbate. The solvent is removed by distillation under reduced pressure to obtain said emulsion.

**Tocopheryl acetate**

Tocopheryl acetate may be completely synthetically manufactured (dl-α-tocopheryl acetate consisting of eight different stereoisomers) or prepared from isolated natural tocopherol(s) and then esterified. The term "tocopherol/tocopheryl" does not only encompass α-tocopherol/tocopheryl, but also β-, γ- and δ-tocopherol/tocopheryl, whereby, however, α-tocopherol is preferred.

Amount of tocopheryl acetate in the beverage

Preferably the amount of tocopheryl acetate is in the range of from 1 to 30 ppm, more preferably it is in the range of from 2 to 20 ppm, most preferably it is in the range of from 5 to 10 ppm, based on the total weight of the beverage.

Tocopheryl acetate form

In the formulation the tocopheryl acetate is embedded in a matrix of protective colloid(s) or of emulsifier(s) or a combination of protective colloid(s) with emulsifier(s). The amount of tocopheryl acetate in the formulation is usually in the range of from 0.1 to 75 weight-%, preferably in the range of from 5 to 75 weight-%, based on the total weight of the formulation.
The protective colloid(s) and the emulsifier(s) are chosen from the same groups as given above for the apoal form.
Additionally water- and/or fat-soluble antioxidants may be present. Preferred examples as well as their amounts are the same as given above for the apoal form.
Since the amounts of the tocopheryl acetate and the fat- and/or water-soluble antioxidants are given, the amount of the protective colloid(s) and/or the emulsifier(s) is chosen in such a way that the total amount sums up to 100 weight-%.
Especially preferred are the forms **"Vitamin E 15% CC"** (crystal clear) and **"Vitamin E 15% CC SMP"** (crystal clear starch maltodextrin polysorbate" as commercially available by DSM Nutritional Products AG, Kaiseraugst, Switzerland.
The form "Vitamin E 15% CC" consists of 150 mg of DL-α-tocopheryl acetate embedded in a matrix of 845 mg of modified food starch, and 5 mg of silicon dioxide and is manufactured as follows: DL-α-Tocopheryl acetate is emulsified into an aqueous solution of modified food starch. The emulsion is spray-dried. The resulting fine powder is treated with a small amount of silicon dioxide as a processing aid.

Alternatives of the form "Vitamin E 15% CC" as described in detail in EP-A 1 106 174 and US 8,409,617 may also be used.

The form "Vitamin E 15% CC SMP" is in detail described in co-pending PCT/EP2014/059207. It comprises

(i) up to 25 weight-% (wt-%) (preferably from 1 to 25 wt-%, more preferably from 5 to 25 wt-%, most preferably from 10 to 20 wt-%) of tocopheryl acetate, based on the total weight of the form, and
(ii) 20 to 50 wt-% (preferably from 25 to 45 wt-%) of at least one maltodextrin having a DE of < 20, based on the total weight of the form, and
(iii) 20 to 50 wt-% (preferably from 25 to 45 wt-%) of at least one modified food starch, based on the total weight of the form, and
(iv) at least 5 wt-% (preferably from 5 to 20 wt-%) of at least one polyoxyethylene sorbitan monofatty acid ester, based on the total weight of the form,

whereby the amount of all components (i) to (iv) sums up to 100 wt-%.

<u>Component (ii): At least one maltodextrin having a DE of ≤ 20</u>

Dextrose equivalent (DE) is a measure of the amount of reducing sugars present in a sugar product, relative to glucose, expressed as a percentage on a dry basis. For example, a maltodextrin with a DE of 10 would have 10% of the reducing power of dextrose (which has a DE of 100). Maltose, a disaccharide made of two glucose (dextrose) molecules has a DE of 52, correcting for the water loss in molecular weight when the two molecules are combined (180/342). Sucrose actually has a DE of 0 even though it is a disaccharide, because both reducing groups of the monosaccharides that make it are connected, so there are no remaining reducing groups. For solutions made from starch, it is an estimate of the percentage reducing sugars present in the total starch product.

In all glucose polymers, from the native starch to glucose syrup, the molecular chain begins with a reducing sugar, containing a free aldehyde. As the starch is hydrolysed, the molecules become shorter and more reducing sugars are present. Because different reducing sugars (e.g. fructose and glucose) have different sweetness, it is incorrect to assume that there is any direct relationship between DE and sweetness.

The DE describes the degree of conversion of starch to dextrose:

starch is close to DE = 0,
glucose/dextrose is DE = 100 (percent).

The standard method of determining DE is the Lane-Eynon titration, based on the reduction of copper(II) sulfate in an alkaline tartrate solution, an application of Fehling's test.

Preferred is a maltodextrin having a DE< 18.

The maltodextrin used in the composition according to the present invention can be from different sources.

Preferably, the maltodextrin is from a corn source or pea source, more preferably from a pea source.

<u>Component (iii): At least one modified food starch</u>

The modified food starch has already been described in detail above.

<u>Component (iv): At least one polyoxyethylene sorbitan monofatty acid ester (also called "polysorbate")</u>

Preferably the polyoxyethylene sorbitan monofatty acid ester is chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate, more preferably polyoxyethylen(20)- sorbitan- monooleate.

The form "Vitamin E 15% CC SMP" is manufactured as follows: In a first step an emulsion comprising all ingredients ((i) - (iv)) and water is produced, which is then dried (usually and preferably by spray drying) resulting in a powderous form. The water content of the powderous form depends on the conditions of the applied drying process.

Preferably "Vitamin E 15% CC SMP" is a dry powder. Nevertheless it can also comprise some water, which originates from the emulsion. Usually and preferably, the water content is less than 5 wt-%, based on the total weight of the powderous form; usually less than 4 wt-%.

## <u>Manufacture of the formulations</u>

The apoal formulations and the tocopheryl acetate formulations may be manufactured by any process known

to the person skilled in the art. They are preferably manufactured by the following process which comprises the steps a) to d):

a) Forming a solution of the apoal in an organic solvent and/or providing tocopheryl acetate (since tocopheryl acetate is an oil, it needs not to be (dis)solved in an organic solvent), optionally adding a fat-soluble antioxidant;
b) Dissolving the protective colloid(s) and/or the emulsifier(s) and optionally the water-soluble antioxidant in water to obtain a matrix;
c) Emulsifying the solution obtained in step a) into the matrix obtained in step b) to obtain an emulsion;
d) Removing the organic solvent from the emulsion obtained in step c).

The steps are now described in more detail below:

Step a)

The organic solvent may be chosen from the group consisting of dimethyl carbonate, ethyl formate, ethyl acetate, isopropyl acetate, methyl tert-butyl ether and methylene chloride.
The amount of the organic solvent and the dissolution temperature are chosen so as to dissolve the apoal and/or the tocopheryl acetate and the fat-soluble antioxidant, if present, completely. Usually it is necessary to heat up the suspension obtained when mixing all compounds present in this step to get a solution. Preferably the temperature to which the suspension is heated up is in the range of from 40 to 90°C, more preferably that temperature is in the range of from 40 to 86°C. After having obtained the solution it is usually kept at the temperature it was before heated up to.

Step b)

Preferably this step is performed at a temperature in the range of from 50 to 70°C, more preferably at a temperature in the range of from 55°C to 67°C, even more preferably at a temperature of around 60°C.
The matrix obtained after having performed step b) is then preferably kept at a temperature in the range of from 25 to 65°C, more preferably at a temperature in the range of from 29°C to 66°C, even more preferably at a temperature in the range of from 29 to 56°C. Depending on the temperature step b) has been performed it may be necessary to cool the matrix down to such a temperature or to heat it up to such a temperature. In most cases the temperature at which step b) is performed and the temperature at which the matrix is kept are chosen in such a way so that a cooling down step is necessary.

Step c)

Preferably this step is performed at a mixing temperature in the range of from 25 to 100°C, more preferably at a mixing temperature in the range of from 30 to 80°C, even more preferably at a mixing temperature in the range of from 35°C to 75°C to obtain an emulsion.
The emulsification can be achieved by using a rotor-stator device or a high pressure homogenizer or both. Other devices known to the person skilled in the art may also be used.
If rotor-stator device and/or a high pressure homogenizer is used, a pressure drop in the range of from 100 to 1000 bar, more preferably in the range of from 150 to 300 bar, is preferably applied.

Step d)

The organic solvent may e.g. be removed by using a thin film evaporator cascade (preferred). Other methods known to the person skilled in the art are also applicable.
The resulting formulations after having performed steps a) to d) can also be dried by any method known to the person skilled in the art, e.g. by spray-drying, spray-drying in combination with fluidised bed granulation or by a powder-catch technique, whereby the sprayed emulsion droplets are caught in a bed of an absorbent, such as starch, and subsequently dried.
The apoal formulations after having performed steps a) to d), i.e. liquid emulsions, are preferably used as such. It is, however, also possible to use the dried forms.
In the most preferred embodiment of the present invention Vitamin E 15% CC or Vitamin E 15% CC SMP is used to color-stabilize beverages comprising Apoal 2.5% EM CC resulting in clear beverages if the beverage itself is clear.
"Clear" in the context of the present invention means that the beverage has a turbidity of ≤ 50 NTU.

## Processes of the present invention

A process for the manufacture of a beverage with increased color stability comprising apoal embedded in a matrix of protective colloid(s) or of emulsifier(s) or a combination of protective colloid(s) with emulsifier(s) comprises the following steps:

a) Providing a beverage comprising apoal embedded in a matrix of protective colloid(s) or of emulsifier(s) or a combination of protective colloid(s) with emulsifier(s);
b) Adding tocopheryl acetate embedded in a matrix of protective colloid(s) or of emulsifier(s) or a combination of protective colloid(s) with emulsifier(s) to said beverage to obtain said color-stable beverage.

As already mentioned above, it may also be possible to formulate in the tocopheryl acetate in the beverage as oily solution. The process then comprises the following steps:

a) Providing a beverage comprising tocopheryl acetate;
b) Adding apoal embedded in a matrix of protective colloid(s) or of emulsifier(s) or a combination of protective colloid(s) with emulsifier(s) to said beverage to obtain said color-stable beverage.

When apoal and tocopheryl acetate are formulated together, i.e. they are together embedded in the same matrix of protective colloid(s) or of emulsifier(s) or a combination of protective colloid(s) with emulsifier(s), the process is as follows:

a) Providing apoal and tocopheryl acetate embedded together in a matrix of protective colloid(s) or of emulsifier(s) or a combination of protective colloid(s) with emulsifier(s);
b) Adding a) to said beverage to obtain said color-stable beverage.

## Use according to the present invention

The present invention is also directed to the use of tocopheryl acetate to increase the color-stability of beverages containing apoal. In a preferred embodiment the apoal is embedded in a matrix of protective colloid(s) or of emulsifier(s) or a combination of protective colloid(s) with emulsifier(s).
The tocopheryl acetate may also be embedded in a matrix of protective colloid(s) or of emulsifier(s) or a combination of protective colloid(s) with emulsifier(s).
Thus, the present invention is also directed to the use of a formulation of tocopheryl acetate, whereby the tocopheryl acetate is embedded in a matrix of protective colloid(s) or of emulsifier(s) or a combination of protective colloid(s) with emulsifier(s), to increase the color-stability of beverages containing a formulation of apoal, whereby the apoal is embedded in a matrix of protective colloid(s) or of emulsifier(s) or a combination of protective colloid(s) with emulsifier(s).

## Product

Beverages that may be used according to the present invention are soft drinks as well as flavored waters, fortified waters, sports drinks, mineral drinks and carbonated beverages. Fruit juices and fruit-juice containing soft drinks may also be used.

## Increased color stability

The color stability is measured by measuring the change of the color values DE* with the time in a colorimeter.
Color (lightness, Chroma, and hue) of the beverages was determined with a HunterLab Ultra Scan Pro spectrocolorimeter (1cm, TTRAN) (Hunter Associates Laboratory, Reston, VA,USA) and expressed on basis of the CIELAB colour scale. The colour change DE* is calculated as follows:

$$DE^* = \sqrt{(\Delta L^*)^2 + (\Delta a^*)^2 + (\Delta b^*)^2}$$

"increased color stability" in the context of the present invention means that DE* of storage time x and initial measurement is lower than ≤ 10; preferably the DE* is in the range of from 0.1-10.

The invention is now further illustrated in the following non-limiting examples.

Examples

**Preparation of "Vitamin E 15% CC SMP"**

140 g of Capsul HS and 105 g of Kleptose Linecaps 17 were put into a 1.5 l reaction vessel and were dispersed in 150 g of deionised water at room temperature. The temperature was increased to 85°C under stirring with a micer disk (800 rpm, d = 6 cm). The solution was kept at 85°C for 60 minutes. 56 g of dl-alpha-tocopheryl acetate were preheated to 65°C and added within 5-10 minutes to the mixture of Capsul HS, Kleptose Linecaps 17 and water under homogenizing with the micer disk (8'500 rpm). Simultaneously 51.5 g of water were added to the emulsion within 5-10 minutes.

This emulsion was homogenized for another 30 minutes at 85°C with the micer disk (8'500 rpm). Then 36.8 g of Lamesorb SMO 20 were preheated to 65°C and added to the emulsion within 5 minutes under homogenizing (micer disk (8'500 rpm). The emulsion temperature was kept at 85°C. Then the emulsion was homogenized for another 30 minutes at 85°C (micer disk, 8'500 rpm).

The emulsion was kept at 85°C for another 30 minutes under stirring (micer disk, 250 rpm). The median particle size was < 100 nm.

Afterwards this emulsion was dried in a spray drying process (emulsion temperature: 85 - 65°C). The temperature at the inlet of the spray drying tower was between 179 - 184°C and the temperature at the outlet of the spray drying tower was between 80 - 96°C.

A powderous form was obtained with a residual moisture content of 3.1%. The size of the inner phase D[0,5] was 93 nm.

The following table shows the amounts of the ingredients of the composition (the values are recalculated for a water-free composition).

**Table 1:**

| **Ingredient** | **Amount [%]** |
|---|---|
| Capsul HS (National Starch) | 41.4 |
| Kleptose Linecaps 17 (Roquette) | 31.1 |
| dl-$\alpha$-tocopherolacetate (DSM) | 16.6 |
| Lamesorb SMO 20 (Cognis) | 10.9 |

Preparation of the beverage

Preparation of the stock solution

The stock solution is prepared according to the intended concentration of the product form of 0.1 weight-% (= 1000 ppm)

- An Apocarotenal 2.5% EM CC stock solution containing 4 g of Apocarotenal and 96 g of demineralized water are prepared under agitation.
- A Vitamin E 15% CC stock solution containing 0.66 g of Vitamin E15% and 99.33 g of demineralized water are prepared under agitation

Preparation of the citric acid solution (50% weight/weight)

Dissolve 100 g of citric acid in 100 g of water by stirring (e.g. magnetic stirrer). The dissolution is endothermic, so slight warming to 30°C to 40°C accelerates the dissolution.

Preparation of the soft drink

Table 1: composition of soft drinks with apoal and tocopheryl acetate

| **Ingredient - bottling syrup Soft drink** | **[g]** |
|---|---|
| Water (Eden springs) | 28.2 |
| Potassium sorbate | 0.2 |
| Sugar syrup 64 ° Brix | 156.2 |
| Ascorbic acid, fine powder | 0.2 |
| Citric acid solution 50% w/w | 5.0 |
| Apricot flavor (Givaudan) 78848-56 | 0.2 |
| Apocarotenal 2.5% EM CC as 1% stock solution in deionized water | 4 * |
| Vitamin E 15% CC as 1% stock solution in deionized water | 26.8 * |
| Filled up with water to | 200.0 |
| *Depends on content applied to the final beverage. E.g. 4 g for 4 ppm Apocarotenal | |

Potassium sorbate was dissolved in water and afterwards the other ingredients were added one after the other while the mixture was gently stirred. Then the resulting soft drink bottling syrup was diluted with drink water in such an amount to result in 1000 ml of the soft drink. The soft drink was then filled in a glass bottle and sealed with a metallic cap. The bottle was pasteurized for approximately 1 minute at 80°C using a tunnel pasteurizer. The bottle was stored at room temperature on the light exposure of 800 Lux/12 hours a day. Color and turbidity measurements were performed directly after beverage preparation and over storage time.

Color measurement

Color (lightness, Chroma, and hue) of the beverages was determined with a HunterLab Ultra Scan Pro spectrocolorimeter (1cm, TTRAN) (Hunter Associates Laboratory, Reston, VA,USA) and expressed on basis of the CIELAB colour scale. Color measurements are carried out after CIE guidelines (Commission International d'Eclairage). Values can be expressed as planar coordinates as L*, a*, b* with L* being the measuring values for lightness, with a* being the value on the red-green axes and b* being the value on the yellow-blue axes (see **Fig. 1**).

The UltraScan® PRO is a high performance color measurement spectrophotometer that measures the full range of human color perception. It measures after The CIE L*a*b*Color scale. This color scale is an approximately uniform color scale. Meaning the difference between points plotted in the color space correspond to visual difference between color plotted. The measurements were performed using transmittance mode with a wavelength range from 350 nm to 1080 nm.

The colour change DE* is calculated as follows:

$$DE^* = \sqrt{(\Delta L)^2 + (\Delta a)^2 + (\Delta b)^2}$$

Colour stability:

DE* < 3 = not visible for the human eye
DE* > 3 to 10 = visible for the human eye but acceptable
DE* > 10 = not acceptable

Instrument settings:

- Color scale is the CIE L*a*b*/L*C*h

- Light source definition: D65 daylight equivalent
- Geometry: Diffuse/8°
- Wavelength: scan 350-1050 nm
- Sample measurement area diameter: 19 mm
- Calibration mode: Transmission

**Fig. 2** shows the color difference results of 4 ppm Apocarotenal 2.5 EM CC with and without Vitamin E 15% CC SMP ("Vitamin E" in the following)

With the addition of Vitamin E the color difference of Apocarotenal could be lowered ( <10) and in the case of additional heat treatment the color could be even stabilized under DE* of 3 which is not visible to the human eye (see **Fig. 3**).

**Fig. 4** shows the color difference results of 10 ppm Apocarotenal 2.5% EM CC with different forms and concentrations of Vitamin E 15% CC SMP ("Vitamin E" in the following)

The color difference over storage time of 10 ppm of Apocarotenal 2.5% EM CC could be lowered drastically by addition of Vitamin E forms. This test was carried out under standardized light influence (800 LUX). Even at this higher light stress with the addition of 10 ppm of Vitamin E the DE* value went down from initial >70 to <10.

## Claims

1. A beverage comprising apoal and tocopheryl acetate with improved color stability.

2. The beverage according to claim 1, whereby apoal is embedded in a matrix of protective colloid(s) or of emulsifier(s) or a combination of protective colloid(s) with emulsifier(s).

3. The beverage according to claim 1, whereby apoal and tocopheryl acetate are both embedded in a matrix of protective colloid(s) or of emulsifier(s) or a combination of protective colloid(s) with emulsifier(s).

4. The beverage according to claim 3, wherein apoal and tocopheryl acetate are embedded in the same matrix of a protective colloid.

5. The beverage according to claim 3, wherein apoal and tocopheryl acetate are embedded in two different matrices of protective colloids.

6. The beverage according to claim 3 or 4, wherein apoal and tocopheryl acetate are embedded together in the same matrix of a protective colloid.

7. The beverage according to claim 3 or 4, wherein apoal and tocopheryl acetate are embedded separately in the same matrix of a protective colloid.

8. The beverage according to claim 3 or 5, wherein apoal and tocopheryl acetate are embedded separately in the two different matrices of protective colloids.

9. The beverage according to any one of the preceding claims, wherein the amount of apoal is in the range of from 1 to 30 ppm, preferably in the range of from 2 to 20 ppm, more preferably in the range of from 2 to 10 ppm, based on the total weight of the beverage.

10. The beverage according to any one of the preceding claims, wherein the amount of tocopheryl acetate is in the range of from 1 to 30 ppm, preferably in the range of from 2 to 20 ppm, more preferably in the range of from 5 to 10 ppm, based on the total weight of the beverage.

11. The beverage according to any one of the preceding claims, whereby the beverage has a turbidity of ≤ 50 NTU.

12. A process for the manufacture of a beverage with increased color stability comprising apoal embedded in a matrix of a protective colloid comprising the following steps:

    a) Providing a beverage comprising apoal embedded in a matrix of a protective colloid;
    b) Adding tocopheryl acetate embedded in a matrix of a protective colloid to said beverage to obtain said beverage.

**13.** The use of tocopheryl acetate to increase the color-stability of beverages containing apoal.

**14.** The use according to claim 13, whereby the apoal is embedded in a matrix of a protective colloid.

**15.** The use according to claim 13 and/or 14, whereby the tocopheryl acetate is embedded in a matrix of a protective colloid.

Fig. 1

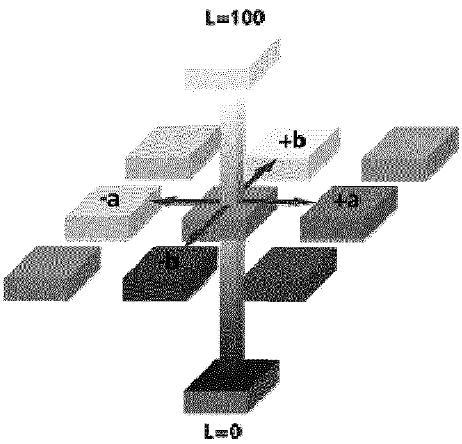
L=100
+b
-a
+a
-b
L=0

Fig. 2

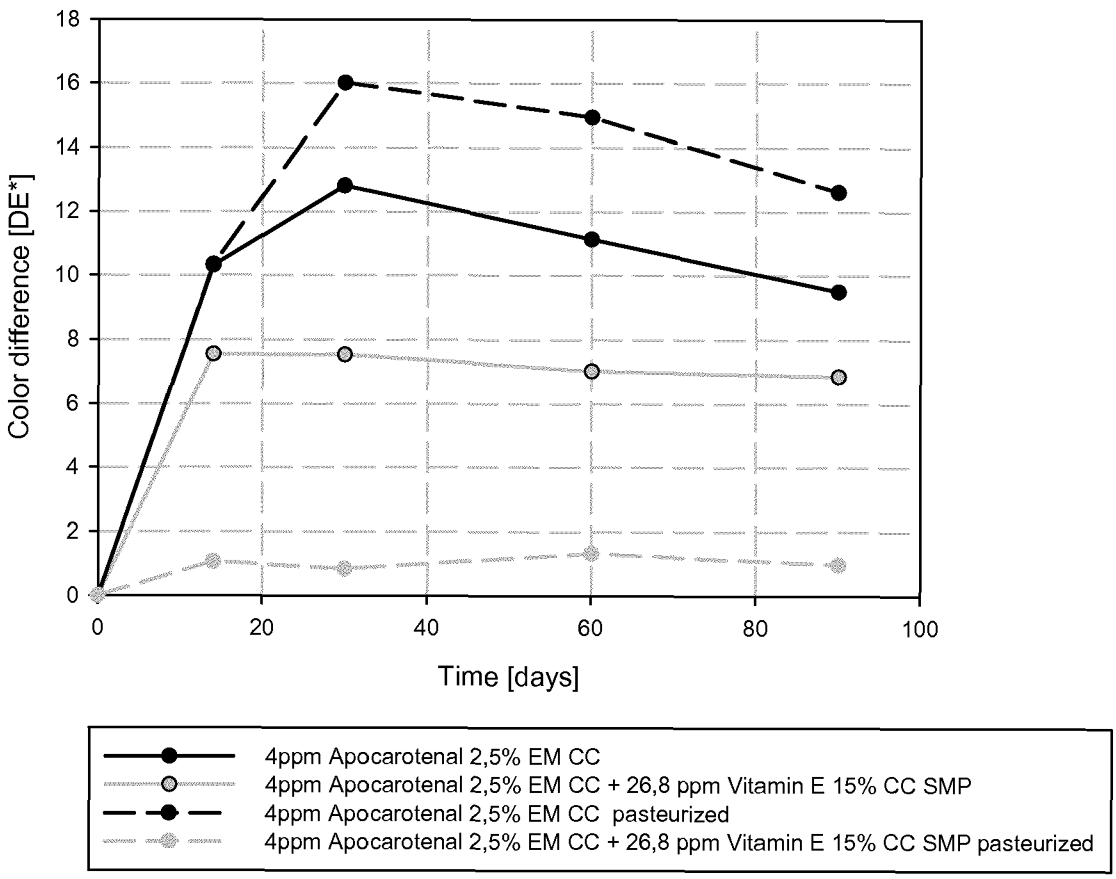
18
16
14
12
10
8
6
4
2
0
0
20
40
60
80
100
Color difference [DE*]
Time [days]
4ppm Apocarotenal 2,5% EM CC
4ppm Apocarotenal 2,5% EM CC + 26,8 ppm Vitamin E 15% CC SMP
4ppm Apocarotenal 2,5% EM CC pasteurized
4ppm Apocarotenal 2,5% EM CC + 26,8 ppm Vitamin E 15% CC SMP pasteurized

**Fig. 3:** not pasteurized samples

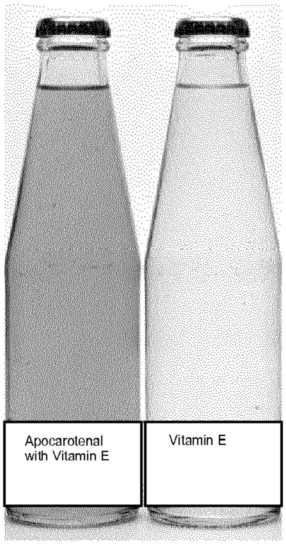


**Fig. 5:** shows the color appearance after 1 month of storage time under light exposure 800 Lux/ 12 h per day. This figure corresponds to Fig. 4. The beverages on the picture are not pasteurized.

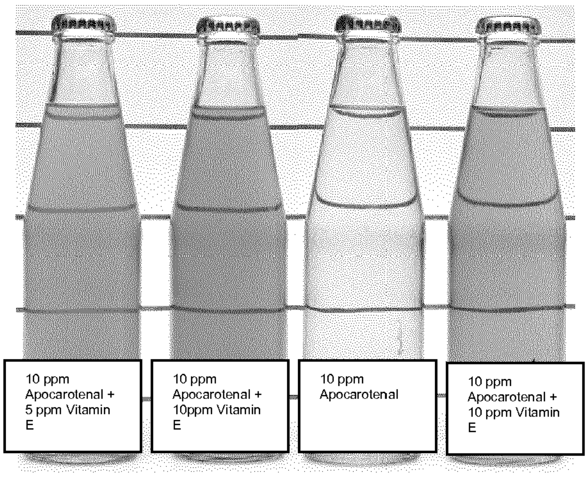

Fig. 4

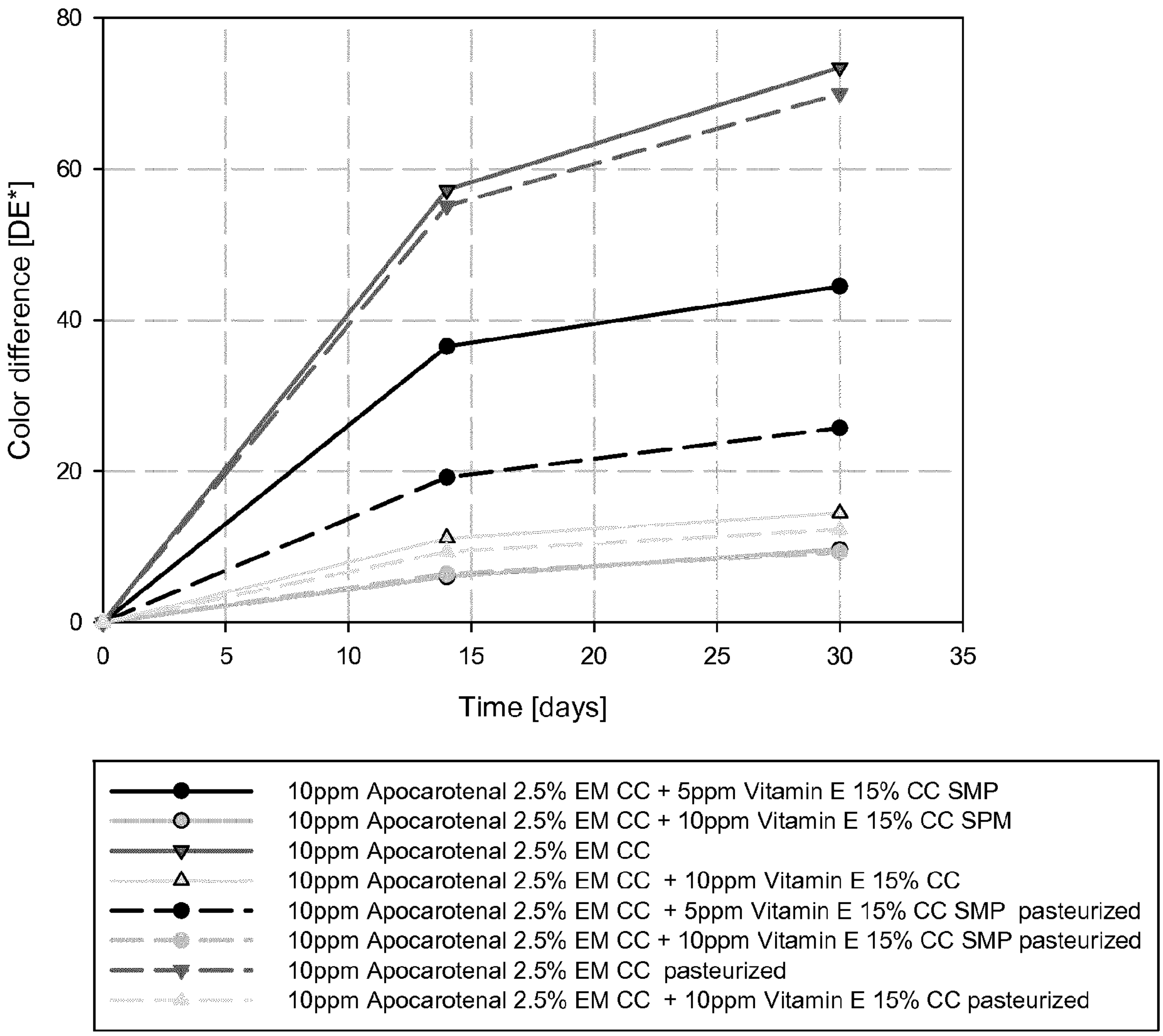
80
60
40
20
0
Color difference [DE*]
0
5
10
15
20
25
30
35
Time [days]
10ppm Apocarotenal 2.5% EM CC + 5ppm Vitamin E 15% CC SMP
10ppm Apocarotenal 2.5% EM CC + 10ppm Vitamin E 15% CC SPM
10ppm Apocarotenal 2.5% EM CC
10ppm Apocarotenal 2.5% EM CC + 10ppm Vitamin E 15% CC
10ppm Apocarotenal 2.5% EM CC + 5ppm Vitamin E 15% CC SMP pasteurized
10ppm Apocarotenal 2.5% EM CC + 10ppm Vitamin E 15% CC SMP pasteurized
10ppm Apocarotenal 2.5% EM CC pasteurized
10ppm Apocarotenal 2.5% EM CC + 10ppm Vitamin E 15% CC pasteurized

Europäisches Patentamt
European Patent Office
Office européen des brevets

# EUROPEAN SEARCH REPORT

Application Number
EP 14 18 8518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 94/06310 A1 (SMITHKLINE BEECHAM PLC [GB]; FORD MICHAEL ANTHONY [GB]; MELLOR CLIVE [) 31 March 1994 (1994-03-31) * examples 1-4 * | 1-15 | INV. A23L2/44 A23L2/58 |
| X | EP 0 848 913 A2 (BASF AG [DE]) 24 June 1998 (1998-06-24) * example 6 * | 1-15 | |
| X | WO 2013/021041 A1 (DSM IP ASSETS BV [NL]; BADOLATO BOENISCH GABRIELA [CH]; GRASS HANSJOER) 14 February 2013 (2013-02-14) * examples 1a-1c * | 1-15 | |
| X | US 2005/037115 A1 (FULLMER LINDA [US] ET AL) 17 February 2005 (2005-02-17) * claims 1,3,6 * | 1-15 | |
| X | WO 03/034841 A1 (KEMIN FOODS LC [US]) 1 May 2003 (2003-05-01) * claims 1,3,6 * | 1-15 | TECHNICAL FIELDS SEARCHED (IPC) |
| X,D | WO 2013/144221 A1 (DSM IP ASSETS BV [NL]) 3 October 2013 (2013-10-03) * examples 1-4,14 * | 1-15 | A23L |
| X | US 2011/293678 A1 (BEHNAM DARIUSH [DE]) 1 December 2011 (2011-12-01) * paragraphs [0019], [0024], [0217], [0219] * | 1-15 | |

The present search report has been drawn up for all claims

1

| Place of search | Date of completion of the search | Examiner |
|---|---|---|
| Munich | 8 December 2014 | Merkl, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 14 18 8518

This annex lists the patent family members relating to the patent documents cited in the above-mentioned European search report. The members are as contained in the European Patent Office EDP file on
The European Patent Office is in no way liable for these particulars which are merely given for the purpose of information.

08-12-2014

| Patent document cited in search report | Publication date | Patent family member(s) | Publication date |
|---|---|---|---|
| WO 9406310 A1 | 31-03-1994 | AT 152584 T | 15-05-1997 |
| | | AU 671152 B2 | 15-08-1996 |
| | | CA 2144083 A1 | 31-03-1994 |
| | | CN 1087481 A | 08-06-1994 |
| | | DE 69310523 D1 | 12-06-1997 |
| | | DE 69310523 T2 | 13-11-1997 |
| | | DK 0660676 T3 | 02-06-1997 |
| | | EP 0660676 A1 | 05-07-1995 |
| | | ES 2104166 T3 | 01-10-1997 |
| | | GR 3024165 T3 | 31-10-1997 |
| | | HK 1002804 A1 | 18-09-1998 |
| | | JP 3421342 B2 | 30-06-2003 |
| | | JP H08504089 A | 07-05-1996 |
| | | NZ 255556 A | 28-10-1996 |
| | | SG 66208 A1 | 20-07-1999 |
| | | US 5607707 A | 04-03-1997 |
| | | WO 9406310 A1 | 31-03-1994 |
| | | ZA 9306729 A | 09-02-1995 |
| EP 0848913 A2 | 24-06-1998 | CN 1192333 A | 09-09-1998 |
| | | DE 19653410 A1 | 25-06-1998 |
| | | EP 0848913 A2 | 24-06-1998 |
| | | JP H10182493 A | 07-07-1998 |
| | | US 6287615 B1 | 11-09-2001 |
| WO 2013021041 A1 | 14-02-2013 | CN 103732078 A | 16-04-2014 |
| | | EP 2741618 A1 | 18-06-2014 |
| | | US 2014295046 A1 | 02-10-2014 |
| | | WO 2013021041 A1 | 14-02-2013 |
| US 2005037115 A1 | 17-02-2005 | NONE | |
| WO 03034841 A1 | 01-05-2003 | AT 437579 T | 15-08-2009 |
| | | EP 1448066 A1 | 25-08-2004 |
| | | ES 2330929 T3 | 17-12-2009 |
| | | JP 4398246 B2 | 13-01-2010 |
| | | JP 2005506841 A | 10-03-2005 |
| | | US 2003129290 A1 | 10-07-2003 |
| | | WO 03034841 A1 | 01-05-2003 |
| WO 2013144221 A1 | 03-10-2013 | EP 2644041 A1 | 02-10-2013 |
| | | WO 2013144221 A1 | 03-10-2013 |
| US 2011293678 A1 | 01-12-2011 | EP 2192160 A1 | 02-06-2010 |
| | | RU 2011126996 A | 10-01-2013 |
| | | US 2011293678 A1 | 01-12-2011 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 14 18 8518

This annex lists the patent family members relating to the patent documents cited in the above-mentioned European search report. The members are as contained in the European Patent Office EDP file on
The European Patent Office is in no way liable for these particulars which are merely given for the purpose of information.

08-12-2014

| Patent document cited in search report | Publication date | Patent family member(s) | Publication date |
|---|---|---|---|
| | | WO 2010063447 A2 | 10-06-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007090614 A
- WO 2013144221 A
- EP 1106174 A
- US 8409617 B
- EP 2014059207 W


### Non-patent literature cited in the description


- Modified Starches: Properties and Uses. CRC Press, Inc, 1986